# EUROPÄISCHE PATENTSCHRIFT

(11) **EP 0 387 488 B1**
(45) Veröffentlichungstag und Bekanntmachung des Hinweises auf die Patenterteilung: **24.03.1993**
(21) Anmeldenummer: 90100570.2
(22) Anmeldetag: 12.01.1990
(51) Int. Cl.: G01D 5/26

(54) **Positionsmesseinrichtung**
Position measuring device
Dispositif de mesure de la position

(30) Priorität: 14.03.1989 DE 3908260
(43) Veröffentlichungstag der Anmeldung: 19.09.1990
(73) Patentinhaber: Dr. Johannes Heidenhain GmbH, D-83292 Traunreut (DE)
(72) Erfinder: Affa, Alfred, Ing. grad., D-8221 Stein/Traun (DE)

(56) Entgegenhaltungen:
- DE-A- 3 917 729
- DE-B- 2 845 542
- DE-C- 2 611 459
- GB-A- 2 159 277

## Beschreibung

Die Erfindung betrifft eine Positionsmeßeinrichtung gemäß dem Oberbegriff des Anspruches 1.

Derartige Positionsmeßeinrichtungen werden insbesondere bei Bearbeitungsmaschinen zur Messung der Relativlage eines Werkzeuges bezüglich eines zu bearbeitenden Werkstücks eingesetzt.

Bei Meßeinrichtungen mit einer Abtasteinheit, die an einer Hilfsführung geführt ist, die von der Führung der beiden Objekte in Form der Maschinenteile getrennt angebracht ist, ist eine gelenkige Ankopplung an das zu messende Objekt bzw. an einen daran angeordneten Mitnehmer unerläßlich.

In der DE-C-26 11 459 ist eine Positionsmeßeinrichtung beschrieben, bei der eine Abtasteinheit zur Abtastung der Teilung eines Teilungsträgers an einer von der Führung der zu messenden Objekte unabhängigen Hilfsführung verschiebbar und an einen Mitnehmer über eine in Meßrichtung steife Kupplung gelenkig angekoppelt ist. Der erste Kupplungsteil dieser Kupplung besteht aus einer Planfläche an der Abtasteinheit, die mit einer sphärischen Fläche des zweiten Kupplungsteils am Mitnehmer mittels einer Feder in ständigem Kontakt steht. Bei dieser Ankopplungsart treten jedoch durch Parallelversatz und Winkelfehler zwischen der Führung der beiden Objekte und der Hilfsführung Relativbewegungen zwischen der Planfläche und der sphärischen Fläche auf, die durch die auftretende Gleitreibung zu einem Verschleiß dieser beiden Kupplungsteile führen und damit Meßungenauigkeiten zur Folge haben, die bei hochpräzisen Positionsmeßeinrichtungen nicht mehr tolerierbar sind.

Eine derartige Positionsmeßeinrichtung wird auch in der DE-A-2 845 542 beschrieben.

Der Erfindung liegt die Aufgabe zugrunde, bei einer Positionsmeßeinrichtung der genannten Gattung Verschleißerscheinungen zwischen den beiden Kupplungsteilen bei auftretenden gegenseitigen Relativbewegungen und dadurch bedingte Meßungenauigkeiten auszuschließen.

Diese Aufgabe wird durch die kennzeichnenden Merkmale des Anspruches 1 gelöst.

Die mit der Erfindung erzielten Vorteile bestehen insbesondere darin, daß durch das Vorsehen wenigstens einer Kugel zwischen den ebenen Platten der beiden Kupplungsteile keine Gleitreibung und damit kein Verschleiß an den beiden Kupplungsteilen mehr auftreten kann, so daß die Meßgenauigkeit und die Meßsicherheit nicht beeinträchtigt werden.

Vorteilhafte Ausbildungen der Erfindung entnimmt man den abhängigen Ansprüchen.

Ausführungsbeispiele der Erfindung werden anhand der Zeichnung näher erläutert.

Es zeigen
- Figur 1: eine erste Positionsmeßeinrichtung mit einer ersten Kupplung in einer teilweise geschnittenen Seitenansicht,
- Figur 2: die erste Positionsmeßeinrichtung in einer teilweise geschnittenen Draufsicht,
- Figur 3: eine zweite Positionsmeßeinrichtung mit einer zweiten Kupplung in einer Seitenansicht in einem Ausschnitt und
- Figur 4: die zweite Positionsmeßeinrichtung in einer Draufsicht im Ausschnitt.

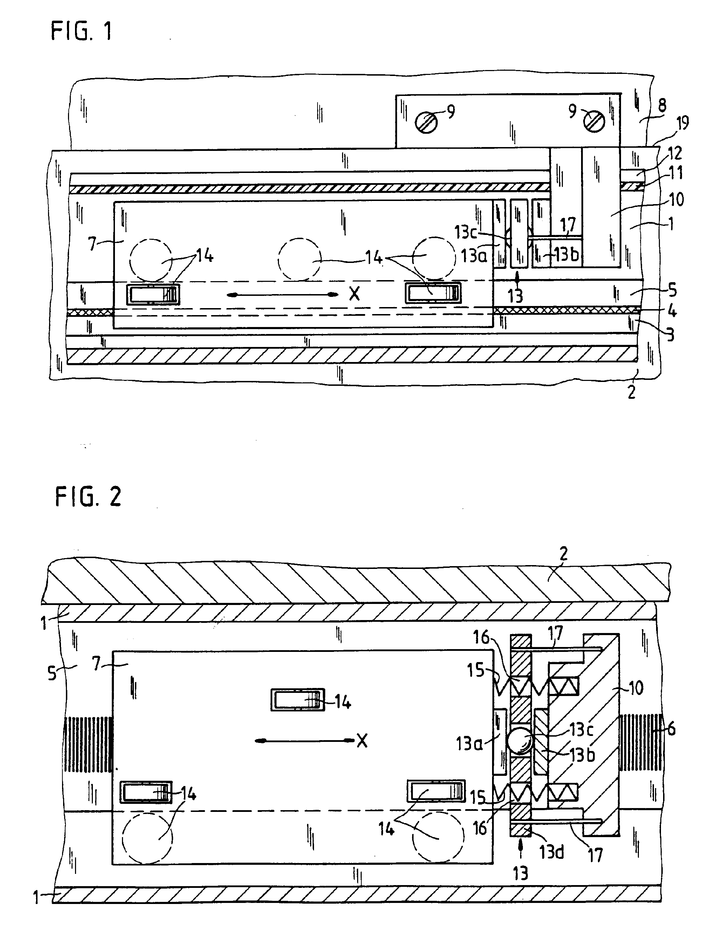

In den Figuren 1 und 2 ist eine erste Positionsmeßeinrichtung in einer teilweise geschnittenen Seitenansicht und Draufsicht gezeigt, deren Gehäuse 1 an einem Schlitten 2 einer nicht dargestellten Bearbeitungsmaschine in beliebiger Weise befestigt ist. Auf einem Steg 3 im Inneren des Gehäuses 1 ist mittels einer Klebeschicht 4 ein Teilungsträger 5 angebracht, dessen Teilung 6 von einer Abtasteinheit 7 in beliebiger bekannter Weise abgetastet wird.

Am Bett 8 der Bearbeitungsmaschine ist mittels Schrauben 9 ein doppelschwertförmiger Mitnehmer 10 befestigt, der durch einen von zwei Dichtlippen 11 verschlossenen Längsschlitz 12 des Gehäuses 1 hindurchgreift und über eine erste Kupplung 13 mit der Abtasteinheit 7 verbunden ist. Die Abtasteinheit 7 ist mittels Rollen 14 auf zwei Oberflächen des Teilungsträgers 5 geführt, die eine von einer Führung 19 des Schlitten 2 bezüglich des Betts 8 unabhängige Hilfsführung für die Abtasteinheit 7 bilden. Der Schlitten 2 und das Bett 8 der Bearbeitungsmaschine stellen die beiden Objekte dar, deren Relativlage in Meßrichtung X gemessen werden soll.

Die Kupplung 13 besteht aus einem ersten Kupplungsteil 13a in Form einer an der Abtasteinheit 7 befestigten ersten ebenen Platte und aus einem zweiten Kupplungsteil 13b in Form einer am Mitnehmer 10 befestigten zweiten ebenen Platte; die einander zugewandten Plattenebenen der beiden Platten 13a, 13b aus Hartmetall verlaufen parallel zueinander und senkrecht zur Meßeinrichtung X. Zwischen den beiden parallelen Plattenebenen der beiden Platten 13a, 13b befindet sich ein dritter Kupplungsteil 13c in Form einer Kugel, die mittels zweier Zugfedern 15 in ständigem Kontakt mit den beiden Plattenebenen steht. Um ein Herausfallen der Kugel 13c durch Maschinenerschütterungen zu verhindern und um die Kugel 13c stets in der richtigen Lage zu halten, wird sie in einem Käfig 13d gehalten, der sich zwischen den beiden Plattenebenen befindet und mittels zweier elastischer Elemente 17 in Form dünner Drähte quer zur Meßrichtung X beweglich gehalten wird, die im Mitnehmer 10 und im Käfig 13d befestigt sind. Die beiden Zugfedern 15 durchsetzen den Käfig 13d durch Bohrungen 16 und sind im Mitnehmer 10 und in der Abtasteinheit 7 befestigt.

In nicht gezeigter Weise können die beiden elastischen Elemente 17 auch in der Abtasteinheit 7 und im Käfig 13d befestigt sein. Ferner kann der Käfig 13d auch mittels zweier elastischer Elemente 17 gehalten sein, die endseitig in der Abtasteinheit 7 bzw. im Mitnehmer 10 befestigt und im Mitnehmer 10 bzw. in der Abtasteinheit 7 sowie in ihrer Mitte im Käfig 13d gelagert sind; in diesem Fall müssen die freien Längen der beiden elastischen Elemente 17 zu beiden Seiten des Käfigs 13d gleich sein.

Bei der Meßbewegung der Abtasteinheit 7 bezüglich der Teilung 6 des Teilungsträgers 5 treten durch Parallelversatz und Winkelfehler zwischen der Führung 19 der beiden Objekte 2, 8 und der Hilfsführung für die Abtasteinheit 7 Relativbewegungen zwischen der Abtasteinheit 7 und dem Mitnehmer 10 und damit zwischen der ersten ebenen Platte 13a und der zweiten ebenen Platte 13b der Kupplung 13 auf, die jedoch zu keinem Verschleiß der beiden Kupplungsteile 13a, 13b durch Gleitreibung führen, da die Kugel 13c frei zwischen den beiden ebenen Platten 13a, 13b rollen kann. Die elastischen Elemente 17 müssen so dimensioniert und der Käfig 13d so ausgebildet sein, daß sie die Rollbewegung der Kugel 13c nicht wesentlich behindern.

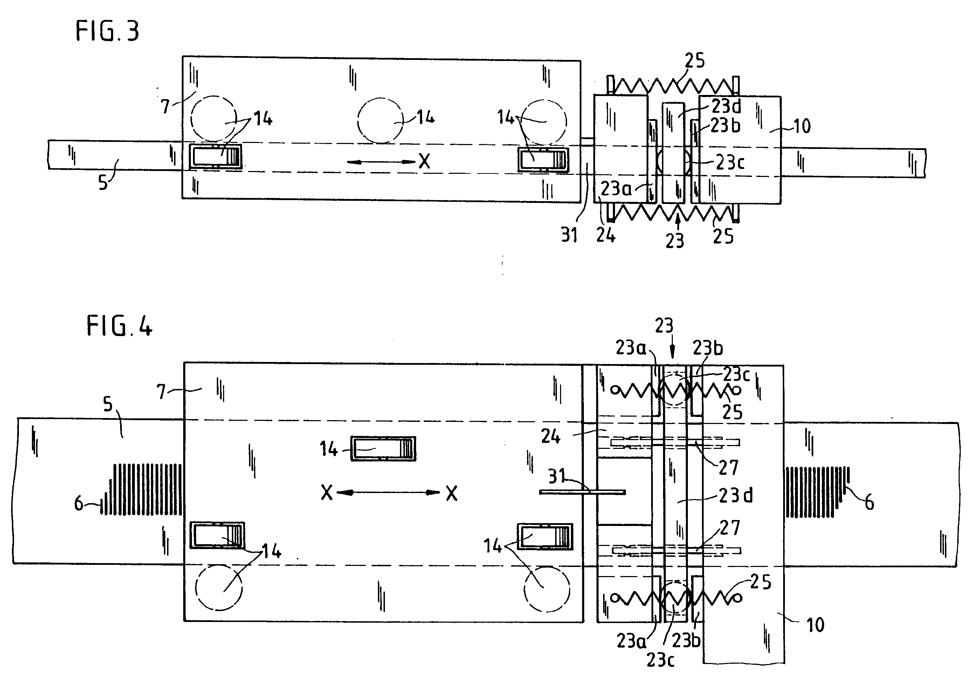

In den Figuren 3 und 4 ist in einem Ausschnitt eine zweite Positionsmeßeinrichtung mit einer zweiten Kupplung 23 in einer Seitenansicht und in einer Draufsicht dargestellt. Diese Kupplung 23 besteht aus einem ersten Kupplungsteil 23a in Form zweier erster ebener Platten, die auf der Vorderseite eines Trägerkörpers 24 in einer Ebene angebracht sind, und aus einem zweiten Kupplungsteil 23b in Form zweier am Mitnehmer 10 in einer Ebene befestigter zweiter ebener Platten; die einander zugewandten Plattenebenen des ersten Plattenpaares 23a und des zweiten Plattenpaares 23b aus Hartmetall verlaufen parallel zueinander und senkrecht zur Meßrichtung X. Zwischen je zwei zusammenwirkenden Platten 23a, 23b befindet sich ein drittes Kupplungsteil 23c in Form einer Kugel, die mittels zweier Zugfedern 25 in ständigem Kontakt mit den beiden zugehörigen Plattenebenen stehen. Die beiden Kugeln 23c mit ihren beiden jeweils zugehörigen Platten 23a, 23b sind zu beiden Seiten der Teilung 6 an den Schmalseiten des Teilungsträgers 5 in Höhe seiner neutralen Ebene 30 angeordnet; die neutrale Ebene 30 verläuft parallel zur Ebene der Teilung 6 durch die Mittelachse (neutrale Faser) des Teilungsträgers 5 in Meßrichtung X.

Um ein Herausfallen der beiden Kugeln 23c durch Maschinenerschütterungen zu vermeiden und um die beiden Kugeln 23c stets in der richtigen Lage zu halten, sind sie in einem gemeinsamen Käfig 23d gehalten, der sich zwischen den vier Platten 23a, 23b befindet und mittels zweier elastischer Elemente 27 in Form dünner Drähte quer zur Meßrichtung X beweglich gehalten wird, die endseitig im Mitnehmer 10 befestigt und im Trägerkörper 24 des ersten Kupplungteils 23a sowie in ihrer Mitte im Käfig 23d gelagert sind, so daß bei Relativbewegungen zwischen dem Mitnehmer 10 und der Abtasteinheit 7 bzw. dem Trägerkörper 24 der Käfig 23d den gleichen Weg wie die Kugeln 23c zurücklegt und somit keine Kräfte auf die Kugeln 23c ausübt; die freien Längen der beiden elastischen Elemente 27 sind zu beiden Seiten des Käfigs 23d gleich. Die vier Zugfedern 25 sind im Mitnehmer 10 und im Trägerkörper 24 des ersten Kupplungsteils 23a befestigt. Der Trägerkörper 24 selbst ist mittels einer Blattfeder 31 als Gelenk mit der Abtasteinheit 7 verbunden; diese Blattfeder 31 verläuft senkrecht zur neutralen Ebene 30 in Meßrichtung X und besitzt somit einen rotatorischen Freiheitsgrad mit einer Drehachse senkrecht zur neutralen Ebene 30. In nicht gezeigter Weise kann der Trägerkörper 24 auch ohne diese Blattfeder 31 starr an der Abtasteinheit 7 befestigt sein.

Die Anordnung der beiden Kugeln 23c in der neutralen Ebene 30 bewirkt zusätzlich, daß bei Verbiegungen des Teilungsträgers 5 mit der außerhalb der neutralen Ebene 30 liegenden Teilung 6 keine Meßungenauigkeiten auftreten.

## Patentansprüche

1. Positionsmeßeinrichtung zur Messung der Relativlage zweier Objekte (2,8), bei der die Teilung (6) eines mit dem einen Objekt (2) verbundenen Teilungsträgers (5) von einer Abtasteinheit (7) abgetastet wird, die am anderen Objekt (8) oder an einem daran angebrachten Mitnehmer (10) über eine in Meßrichtung steife Kupplung (13) gelenkig angekoppelt und an einer von der Führung (19) der zu messenden Objekte (2,8) unabhängigen Hilfsführung verschiebbar ist, und bei der die Kupplung (13) sich kontaktierende Kupplungsteile aufweist, dadurch gekennzeichnet, daß ein erstes Kupplungsteil (13a, 23a) mit wenigstens einer ersten ebenen Fläche mit der Abtasteinheit (7) und ein zweites Kupplungsteil (13b, 23b) mit wenigstens einer zweiten ebenen Fläche mit dem Objekt (2) oder mit dem Mitnehmer (10) verbunden sind, daß zwischen dem ersten Kupplungsteil (13a, 23a) und dem zweiten Kupplungsteil (13b, 23b) ein drittes Kupplungsteil (13c, 23c) in Form wenigstens einer Kugel vorgesehen ist und daß die wenigstens eine Kugel (13c, 23c) mit den quer zur Meßrichtung (X) verlaufenden ebenen Flächen der beiden Kupplungsteile (13a, 13b, 23a, 23b) in ständigem Kontakt steht.

2. Meßeinrichtung nach Anspruch 1, dadurch gekennzeichnet, daß die wenigstens eine Kugel (13c, 23c) durch ein Haltemittel (13d, 23d) in einer bestimmten Lage gehalten ist.

3. Meßeinrichtung nach den Ansprüchen 1 und 2, dadurch gekennzeichnet, daß das erste Kupplungsteil (13a) in Form einer ersten ebenen Platte starr an der Abtasteinheit (7) und das zweite Kupplungsteil (13b) in Form einer zweiten ebenen Platte starr am Mitnehmer (10) befestigt sind, daß eine Kugel (13c) zwischen den beiden ebenen Platten (13a, 13b) mit denselben mittels Zugfedern (15) in ständigem Kontakt steht und daß das Haltemittel (13d) für die Kugel (13c) aus einem Käfig zwischen den beiden ebenen Platten (13a, 13b) besteht, der durch elastische Elemente (17) quer zur Meßrichtung (X) beweglich gehalten ist.

4. Meßeinrichtung nach den Ansprüchen 1 und 2, dadurch gekennzeichnet, daß das erste Kupplungsteil (23a) in Form zweier erster ebener Platten über ein Gelenk (31) mit einem rotatorischen Freiheitsgrad mit der Abtasteinheit (7) verbunden und das zweite Kupplungsteil (23b) in Form zweier zweiter ebener Platten starr am Mitnehmer (10) befestigt sind, daß zwei Kugeln (23c) jeweils zwischen zwei ebenen Platten (23 a, 23b) mit denselben mittels Zugfedern (25) in ständigem Kontakt stehen und daß das Haltemittel (23d) für die beiden Kugeln (23c) aus einem gemeinsamen Käfig zwischen den ebenen Platten (23a, 23b) besteht, der durch elastische Elemente (27) quer zur Meßrichtung (X) beweglich gehalten ist.

5. Meßeinrichtung nach Anspruch 4, dadurch gekennzeichnet, daß das Gelenk (31) aus einer Blattfeder besteht, die senkrecht zur Teilung (6) in Meßrichtung (X) angeordnet ist.

6. Meßeinrichtung nach Anspruch 3, dadurch gekennzeichnet, daß die elastischen Elemente (17) aus dünnen Drähten bestehen, die im Mitnehmer (10) oder in der Abtasteinheit (7) sowie im Käfig (13d) befestigt sind.

7. Meßeinrichtung nach Anspruch 3, dadurch gekennzeichnet, daß die elastischen Elemente (17) endseitig in der Abtasteinheit (7) bzw. im Mitnehmer (10) befestigt und im Mitnehmer (10) bzw. in der Abtasteinheit (7) sowie in ihrer Mitte im Käfig (13d) gelagert sind.

8. Meßeinrichtung nach Anspruch 4, dadurch gekennzeichnet, daß die elastischen Elemente (27) endseitig in einem Trägerkörper (24) für die beiden ersten ebenen Platten (23a) bzw. im Mitnehmer (10) befestigt und im Mitnehmer (10) bzw. im Trägerkörper (24) sowie in ihrer Mitte im Käfig (23d) gelagert sind.

9. Meßeinrichtung nach den Ansprüchen 3 und 7, dadurch gekennzeichnet, daß die mit dem Mitnehmer (10) und mit der Abtasteinheit (7) verbundenen elastischen Elemente (17) die gleichen freien Längen zu beiden Seiten des Käfigs (13d) aufweisen.

10. Meßeinrichtung nach den Ansprüchen 4 und 8, dadurch gekennzeichnet, daß die mit dem Mitnehmer (10) und mit dem Trägerkörper (24) verbundenen elastischen Elemente (27) die gleichen freien Längen zu beiden Seiten des Käfigs (23d) aufweisen.

## Revendications

1. Dispositif de mesure de position pour la mesure de la position relative de deux objets (2, 8) dans lequel la graduation (6) d'un support de graduation (5) lié à l'un des objets (2) est lue par une unité de lecture (7) qui, par l'intermédiaire d'un accouplement (13) rigide dans la direction de mesure, est liée de manière articulée à l'autre objet (8) ou à un dispositif d'entraînement (10) monté sur celui-ci et peut se déplacer le long d'une glissière auxiliaire indépendante de la glissière (19) de l'objet à mesurer (2, 8) et dans lequel l'accouplement (13) comporte des éléments d'accouplement en contact l'un avec l'autre, caractérisé par le fait qu'un premier élément d'accouplement (13a, 23a) muni d'au moins une première surface plane est relié à l'unité de lecture (7) et un deuxième élément d'accouplement (13b, 23b) muni d'au moins une deuxième surface plane est relié à l'objet (2) ou au dispositif d'entraînement (10), par le fait qu'il est prévu, entre le premier élément d'accouplement (13a, 23a) et le deuxième élément d'accouplement ( 13b, 23b) un troisième élément d'accouplement ( 13c, 23c) qui se présente sous la forme d'une bille et que la bille (13c, 23c), au nombre d'au moins une, est en contact permanent avec les surfaces planes perpendiculaires à la direction de mesure (X) des deux éléments d'accouplement ( 13a, 13b, 23a, 23b).

2. Dispositif de mesure selon la revendication 1, caractérisé par le fait que la bille (13c, 23c), au nombre d'au moins une, est maintenue dans une position déterminée par un moyen de retenue (13d, 23d).

3. Dispositif de mesure selon les revendications 1 et 2, caractérisé par le fait que le premier élément d'accouplement (13a) qui se présente sous la forme d'une première plaque plane est fixé rigidement sur l'unité de lecture (7) et le deuxième élément d'accouplement (13b) qui se présente sous la forme d'une deuxième plaque plane est fixé rigidement sur l'entraîneur (10), qu'une bille (13c) placée entre les deux plaques (13a, 13b) est maintenue en contact permanent avec ces dernières par des ressorts de traction (15) et par le fait que le moyen de retenue (13d) de la bille (13c) est constitué par une cage placée entre les deux plaques planes (13a, 13b), laquelle cage est maintenue par des éléments élastiques (17) avec possibilité de déplacement dans la direction transversale par rapport à la direction de mesure (X).

4. Dispositif de mesure selon les revendications 1 et 2, caractérisé par le fait que le premier élément d'accouplement (23a) qui se présente sous la forme de deux premières plaques planes est fixé sur l'unité de lecture (7) par l'intermédiaire d'une articulation (31) présentant un degré de liberté en rotation et le deuxième élément d'accouplement (23b) qui se présente sous la forme de deux deuxièmes plaques planes est fixé rigidement sur le dispositif d'entraînement (10), que deux billes (23c) placées respectivement entre deux plaques (23a, 23b) planes sont naintenues en contact permanent avec ces dernières par des ressorts de traction (25) et par le fait que le moyen de retenue (23d) des deux billes (23c) est constitué par une cage commune placée entre les plaques planes (23a, 23b), laquelle cage est maintenue par des éléments élastiques (27) avec possibilité de déplacement dans la direction transversale par rapport à la direction de mesure (X).

5. Dispositif de mesure selon la revendication 4, caractérisé par le fait que l'articulation (31) est constituée par un ressort à lames qui est disposé perpendiculairement à la graduation (6) dans la direction de me sure (X).

6. Dispositif de mesure selon la revendication 3, caractérisé par le fait que les éléments élastiques (17) sont constitués par des fils fins qui sont fixés dans le dispositif d'entraînement (10) ou dans l'unité de lecture (7) ainsi que dans la cage (13d).

7. Dispositif de mesure selon la revendication 3, caractérisé par le fait que les éléments élastiques (17) sont fixés, côté extrémité, sur l'unité de lecture (7) ou sur le dispositif d'entraînement (10) et sont montés dans des logements dans le dispositif d'entraînement (10) ou dans l'unité de lecture (7) et, en leur milieu, dans la cage (13d).

8. Dispositif de mesure selon la revendicatiom 4, caractérisé par le fait que les éléments élastiques (27) sont fixés, côté extrémité, sur élément-support (24) pour les deux premières plaques (23a) ou sur le dispositif d'entraînement (10) et sont montés dans des logements dans le dispositif d'entraînement (10) ou dans l'élément-support (24) et, en leur milieu, dans la cage (23d).

9. Dispositif de mesure selon les revendications 3 et 7, caractérisé par le fait que les éléments élastiques (17) liés au dispositif d'entraînement (10) et à l'unité de lecture (7) ont les mêmes longueurs libres de chaque côté de la cage (13d).

10. Dispositif de mesure selon les revendications 4 et 8, caractérisé par le fait que les éléments élastiques (27) liés au dispositif d'entraînement (10) et à l'élément-support (24) ont ont les mêmes longueurs libres de chaque côté de la cage (23d).

## Claims

1. A position-measuring device for measuring the relative position of two objects (2, 8), in which the scale division (6) of a scale division carrier (5) connected to one object (2) is scanned by a scanner unit (7) which is flexibly coupled, by a coupling (13) which is rigid in the direction of measurement, to the other object (8) or to a carriage (10) secured thereto, and is displaceable on an auxiliary guide independent of the guide (19) for the objects (2, 8) to be measured, and in which the coupling (13) has mutually-contacting coupling portions, characterised in that a first coupling portion (13a, 23a) is connected to at least a first plane surface with the scanner unit (7), and a second coupling portion (13b, 23b) is attached to at least a second plane surface with the object (2) or with the carriage (10), in that there is provided, between the first coupling portion (13a, 23a) and the second coupling portion (13b, 23b), a third coupling portion (13c, 23c) in the form of a ball, and in that the at least one ball (13c, 23c) is in permanent contact with the plane surfaces, extending transversely to the direction of measurement (X), of the two coupling portions (13a, 13b, 23a, 23b).

2. A measuring device according to Claim 1, characterised in that the at least one ball (13c, 23c) is secured in a determined position by a retaining means (13d, 23d).

3. A measuring device according to Claims 1 and 2, characterised in that the first coupling portion (13a) is rigidly attached in the form of a first plane plate to the scanner unit (7), and the second coupling portion (13b) is rigidly attached in the form of a second plane plate to the carriage (10), in that a ball (13c) is located between the two plane plates (13a, 13b) and in permanent contact therewith by means of traction springs (15), and in that the retaining means (13d) for the ball (13c) comprise a cage between the two plane plates (13a, 13b), said cage being held by resilient elements (17) so as to be movable transversely to the direction of measurement (X).

4. A measuring device according to Claims 1 and 2, characterised in that the first coupling portion (23a), in the form of two first plane plates, is connected by a joint (31), with a degree of rotational freedom, to the scanner unit (7), and the second coupling portion (23b), in the form of two second plane plates, is rigidly secured to the carriage (10), in that two balls (23c) are respectively located between two plane plates (23a, 23b) and held in permanent contact therewith by means of traction springs (25), and in that the retaining means (23d) for the two balls (23c) comprise a common cage between the plane plates (23a, 23b), said cage being held by resilient elements (27) so as to be movable transversely to the direction of measurement (X).

5. A measuring device according to Claim 4, characterised in that the joint (31) comprises a leaf spring which is disposed perpendicularly to the scale division (6) in the direction of measurement (X).

6. A measuring device according to Claim 3, characterised in that the resilient elements (17) comprise thin wires which are secured in the carriage (10) or in the scanner unit (7) and in the cage (13d).

7. A measuring device according to Claim 3, characterised in that the resilient elements (17) are secured at one end in the scanner unit (7) or in the carriage (10), and are mounted in bearings in the carriage (10) or in the scanner unit (7) and, at their centre, in the cage (13d).

8. A measuring device according to Claim 4, characterised in that the resilient elements (27) are attached at one end in a carrier member (24) for the two first plane plates (23a), or are secured in the carriage (10), and are mounted in bearings in the carriage (10) or in the carrier member (24) and, at their centre, in the cage (13d).

9. A measuring device according to Claims 3 and 7, characterised in that the resilient elements (17), connected to the carriage (10) and to the scanner unit (7), have the same free lengths on both sides of the cage (13d).

10. A measuring device according to Claims 4 and 8, characterised in that the resilient elements (27), connected to the carriage (10) and to the carrier member (24), have the same free lengths on both sides of the cage (13d).
